# FASCICULE DE BREVET EUROPEEN

(11) **EP 2 640 636 B1**
(45) Date de publication et mention de la délivrance du brevet: **10.01.2018**
(21) Numéro de dépôt: 11794559.2
(22) Date de dépôt: 16.11.2011
(51) Int. Cl.: B64C 11/34, B64C 11/32

(54) **DISPOSITIF DE PASSAGE D'UNE HÉLICE EN RÉVERSE COMPORTANT UN ACTUATEUR AGISSANT SUR UN MANETON**
PROPELLERVERSTELLMECHANISMUS MIT EINEM AUF DIE GEGENGEWICHTE WIRKENDEM STELLELEMENT
PROPELLER PITCH CHANGE MECHANISM HAVING AN ACTUATOR FOR BIASING THE PROPELLER COUNTERWEIGHTS

(30) Priorité: 16.11.2010 FR 1059398
(43) Date de publication de la demande: 25.09.2013
(73) Titulaire: Safran Aircraft Engines, 75015 Paris (FR)
(72) Inventeur: GALLET, François, F-75012 Paris (FR)
(74) Mandataire: Gevers & Orès
(86) Numéro de dépôt international: PCT/FR2011/052669
(87) Numéro de publication internationale: WO 2012/066240

(56) Documents cités:
- GB-A- 2 218 747

## Description

Le domaine de la présente invention est celui des turbomachines aéronautiques et plus particulièrement celui des turbomoteurs à hélices non carénées, dites "open-rotor" ou à hélice rapides, et celui des dispositifs de commande de l'orientation des pales de ces hélices.

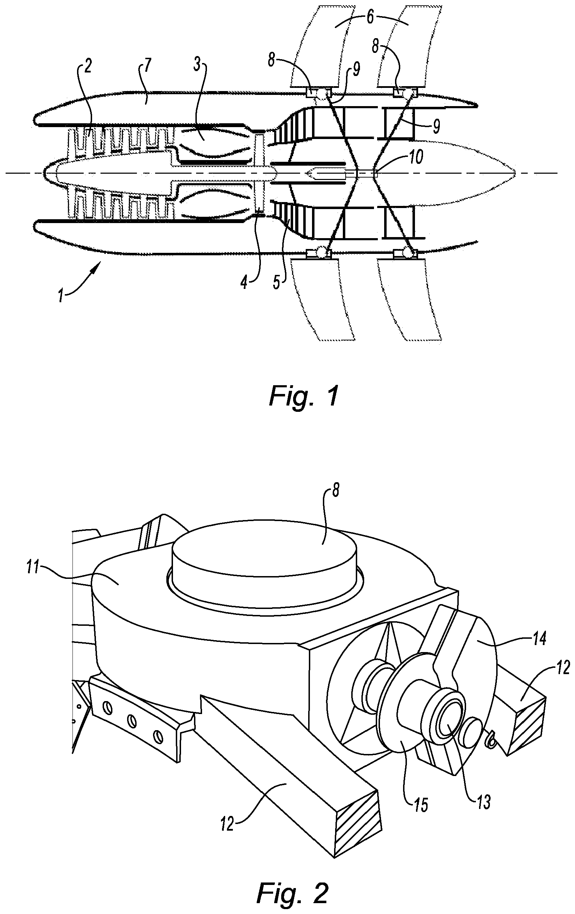

La technologie des moteurs aéronautiques évolue rapidement et une des voies explorées pour améliorer la consommation spécifique des moteurs d'avions civils est actuellement constituée par la mise au point de moteurs open-rotor. De tels moteurs, comme celui décrit dans la demande de brevet FR2941493 de la demanderesse, comportent un générateur de gaz de turbomoteur classique, dont un ou plusieurs étages de turbine entraînent une soufflante non carénée s'étendant à l'extérieur du moteur. Pour des raisons de niveau de poussée à atteindre et de réduction du bruit généré par les pales, le moteur comporte généralement deux hélices non carénées contrarotatives, c'est-à-dire qui tournent en sens inverses, et qui sont situées à l'aval du moteur pour les éloigner le plus possible de la cabine des passagers. La configuration générale d'un moteur open-rotor est donnée par la figure 1.

Comme dans le cas des turbopropulseurs classiques les pales des hélices des open-rotors sont à calage variable, c'est à dire que le pas de ces hélices peut être modifié au cours du vol pour faire évoluer la poussée du moteur et optimiser le rendement de l'hélice en fonction de la vitesse de l'aéronef. Des dispositifs multiples ont été imaginés pour faire varier le calage des pales, qui comportent généralement une mise en rotation de l'aube autour de son axe principal par l'intermédiaire de pignons coniques, situés sous le pied de l'aube, qui coopèrent avec des pignons coniques d'un système de commande. Un exemple de ces dispositifs est donné dans le document britannique GB 2218747.

Une des contraintes des systèmes de commande du calage des pales des hélices est de devoir amener celles-ci dans la position dite "en drapeau" dans le cas d'une défaillance de ce système. La position en drapeau consiste à faire tourner l'hélice jusqu'à ce que sa corde s'aligne sensiblement dans le lit du vent, réduisant ainsi au maximum la traînée qu'elle génère et, par suite, le déséquilibre en lacet produit sur l'avion. La position en drapeau doit correspondre à une position d'équilibre prise automatiquement par l'hélice lorsque le système de commande du calage ne transmet plus de couple. Pour cela des masselottes formant contrepoids sont généralement attachées aux pignons coniques du système de commande et placées en porte-à-faux par rapport à eux. En fonctionnement normal elles sont maintenues en position par le système de commande. En cas de défaillance de ce système, l'action de la force centrifuge due à la rotation de l'hélice les entraîne vers une position de repos qui correspond à la position de drapeau de la pale.

En utilisation normale, lors des phases de vol, le calage d'une hélice évolue entre deux bornes extrêmes correspondant à une position de petit pas à faible vitesse d'avancement, de l'ordre de 30° par rapport au plan de rotation des hélices, et une position de grand pas à grande vitesse, qui est de l'ordre de 65° par rapport à ce même plan de rotation des hélices. La position de drapeau correspond à un calage supérieur à celui du grand pas, et égal à environ 90°. Les calages dans ces conditions normales d'utilisation sont, par convention, dits positifs.

Après l'atterrissage il convient de ralentir l'aéronef afin de réduire sa distance de roulement et, ainsi, lui permettre d'utiliser des pistes de longueur réduite. Pour cela les moteurs sont mis dans une position dite de réverse, qui tend à diriger leur poussée vers l'amont du moteur. Sur un moteur open rotor, comme c'est déjà le cas sur les turbopropulseurs, la réverse est obtenue en donnant aux hélices un calage négatif, c'est-à-dire en positionnant le bord d'attaque de leurs pales dans le secteur arrière par rapport au plan de rotation de l'hélice. Cette position est obtenue en poursuivant la rotation de l'hélice, autour de son axe longitudinal, au delà du petit pas, jusqu'à traverser la position de pas nul, c'est-à-dire celle où les pales sont dans le plan de rotation de l'hélice, et à faire croître le pas jusqu'à un calage négatif déterminé.

Communément, le pignon conique de pied de pale donne lieu à un rapport de réduction de 2 entre l'angle de calage du contrepoids et l'angle de calage de la pale. Par conséquent, une rotation de 90° de l'hélice entre la position de drapeau et celle du pas nul correspond à une rotation des masselottes de 180°, qui les fait passer de la position verticale supérieure, et donc stable, du drapeau à une position verticale inférieure, instable, située à l'opposé de celle-ci.

Un des problèmes à résoudre sur ces moteurs, qu'il s'agisse d'open rotor ou de turbopropulseurs est de faire en sorte que les masselottes ne restent pas dans cette position instable lorsque le pilote commande le passage en réverse, et qu'on soit sûr que les pales des hélices sont bien dans la position des calages négatifs lorsque le pilote remet de la puissance après l'atterrissage. A défaut, la mise de gaz se traduira par un emballement du moteur si les hélices restent en calage nul, avec des risques de survitesse et donc de rupture des aubes, ou bien encore par une traction exercée par les hélices si le calage est resté dans la zone des calages positifs, alors même que le pilote attend une action de freinage par celles-ci.

Il importe donc de s'assurer que les hélices passent bien la position de calage nul lors d'une manoeuvre de passage en réverse, c'est à dire que les masselottes ne restent pas dans la position instable située entre les calages positifs et les calages négatifs.

La présente invention a pour but de remédier à ces inconvénients en proposant un dispositif de commande du pas d'une hélice qui garantisse la traversée de la position de calage nul par les masselottes dans le cas d'une demande de passage en réverse.

A cet effet, l'invention a pour objet une turbomachine comportant au moins une hélice et un dispositif de commande du passage dans le mode réverse de la turbomachine par une action sur un axe de commande du calage de ladite hélice, ledit dispositif comprenant au moins une masselotte montée en porte-à-faux sur ledit axe de commande et agencée de façon à entraîner lesdites hélices vers leur position de drapeau sous l'action de la force centrifuge générée par la rotation de la turbomachine, le dispositif comprenant également un actuateur apte à faire tourner ledit axe de commande pour faire passer le calage des hélices d'un mode traction à un mode réverse, en traversant une position de calage à pas nul caractérisé en ce que la masselotte est dans une position d'équilibre instable vis-à-vis de l'action de la force centrifuge, lorsque ledit axe de commande fait passer le calage des hélices par la position de pas nul.
L'association d'un équilibre instable de la masselotte à la position de calage nul des hélices permet de garantir que les hélices ne resteront pas dans une position à calage nul, ce qui pourrait entraîner une rupture du moteur si le pilote mettait les gaz dans cette position. Le dispositif comporte un moyen d'actionnement exerçant un couple sur ledit axe de commande lorsque la masselotte est dans ladite position d'équilibre instable, de façon à l'empêcher de rester dans cette position. Les hélices ne reviendront ainsi pas en mode traction cette configuration présentant elle aussi un danger si le pilote mettait les gaz en pensant que son moteur est en réverse. Ledit moyen d'actionnement exerce un couple sur ledit axe tant lors du passage du mode traction vers le mode réverse que lors du retour du mode réverse vers le mode traction. On garantit ainsi le passage effectif des hélices dans la configuration voulue, que ce soit en réverse ou en traction.

Préférentiellement l'actuateur n'exerce pas de couple sur ledit axe de commande lorsque les masselottes sont dans la position d'équilibre instable. Cette configuration élimine les possibles interférences entre les couples appliqués sur l'axe de commande par le dispositif de passage en réverse et par l'actuateur. Elle simplifie la mise au point du dispositif de passage en réverse.

Dans un mode préférentiel de réalisation ledit moyen d'actionnement exerce son couple sur ledit axe de commande par l'intermédiaire d'un maneton monté libre en rotation par une de ses extrémités sur ladite masselotte.

Avantageusement ledit moyen d'actionnement est maintenu à une de ses extrémités par un axe de rotation déporté parallèlement à l'axe de commande et est rappelé en rotation autour de cet axe, en direction du maneton, par un moyen formant couple de rappel.

De façon préférentielle le maneton porte à son extrémité libre un moyen de transfert apte à coopérer avec ledit moyen d'actionnement de façon à transférer le couple fourni par ledit moyen d'actionnement à l'arbre de commande.

Dans un mode particulier de réalisation ledit moyen d'actionnement est un linguet et le moyen de transfert est une tige conformée pour glisser sur ledit linguet au cours du passage en réverse.

De façon plus préférentielle ledit linguet comporte à son extrémité libre un moyen de retenue apte à limiter le glissement de ladite tige sur le linguet au cours du passage en réverse, de façon à fournir une prise d'appui pour ledit maneton.

Dans un mode préférentiel de réalisation ladite tige est en butée contre ledit moyen de retenue avant l'atteinte de sa position d'équilibre instable par ladite masselotte. Avantageusement, lors du passage de ladite masselotte dans sa position d'équilibre instable, la tige est en butée contre ledit moyen de retenue et le maneton est orienté de façon à pousser la masselotte au-delà de ladite position instable.

Dans un mode particulier de réalisation le dispositif de commande comporte deux moyens d'actionnement tels que décrits ci-dessus, un premier moyen exerçant un couple sur le maneton pour le passage de la position d'utilisation à la position de réverse et le second moyen exerçant un couple sur ledit maneton pour le retour à la position d'utilisation. De façon préférentielle, l'hélice comporte un pied de pale équipé d'un dispositif de commande du passage dans le mode réverse. L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue schématique en coupe d'un turbomoteur à hélice rapide ;
- la figure 2 est une vue en perspective d'un dispositif de commande du calage des pales du turbomoteur de la figure 1, selon un mode de réalisation de l'invention ;
- la figure 3 est une vue de détail montrant l'actuateur du dispositif de commande de la figure 2 ;
- la figure 4 est une vue de face du dispositif de la figure 2, le calage de l'hélice correspondant à la position de croisière ;
- la figure 5 est une vue de face du dispositif de la figure 2, le calage de l'hélice correspondant à la position du petit pas, le moteur étant au ralenti au sol ;
- les figures 6 à 8 sont des vues successives de face du dispositif de la figure 2, le calage de l'hélice évoluant progressivement de la position du petit pas du ralenti au sol vers celle du petit pas en réverse, et
- la figure 9 est une vue de face du dispositif de la figure 2, le calage de l'hélice étant dans sa position finale, correspondant au petit pas en réverse.

En se référant à la figure 1, on voit un turbomoteur à hélices rapides 1, comprenant, d'une part, un générateur de gaz classique constitué entre autres d'un compresseur 2, d'une chambre de combustion 3 et d'une turbine 4 qui entraîne le compresseur 2, et, d'autre part, une turbine libre 5 située en aval de la turbine liée 4, qui entraîne les deux séries de pales des hélices contrarotatives 6. Les hélices sont positionnées à l'extérieur du carter 7 du générateur de gaz et leurs aubes sont tenues par un pied d'aube 8 mobile en rotation autour d'un axe radial par rapport à la turbomachine 1, qui passe par le centre du pied de l'aube et qui constitue l'axe principal de la pale. La rotation de la pale est assurée par un actuateur, ayant la forme d'une tringle 9, qui agit sur un couple de pignons coniques dont l'un est fixé sur l'aube, en entourant le pied de l'aube 8. Comme indiqué précédemment, la taille de ces pignons coniques donne lieu à un rapport de réduction de 2, de façon que l'hélice décrive le parcours entre sa position drapeau et sa position de calage nul lorsque les masselottes associées effectuent une rotation de 180°. Un système de régulation 10 commande, par l'intermédiaire des tringles 9, la position angulaire des pales de chacune des hélices 6 et s'assure de leur mise en rotation synchronisée.

La figure 2 montre une enceinte de protection 11 du dispositif de commande du calage des aubes selon l'invention, qui entoure le pied d'aube 8 et qui est fixée sur l'anneau de retenue 12 des aubes. Cet anneau tournant assure la solidarisation des aubes avec l'arbre du moteur et les entraînent en rotation pour la génération de la poussée. L'enceinte 11 a essentiellement la forme d'un cylindre qui entoure le pied d'aube 8 et qui comporte une fenêtre latérale d'où sort un axe de commande 13, porteur de pignons coniques qui engrènent sur des pignons de pied de pale pour assurer la commande du calage de l'aube. Sur cet axe sont fixées, en porte-à-faux, des masselottes 14 ayant la forme de deux secteurs angulaires centrés sur l'axe, qui sont placés côte à côte et fixés sur un disque 15 emmanché sur l'axe support 13. Ces deux secteurs sont positionnés angulairement de façon à exercer, sous l'action de la force centrifuge, un couple tendant à entraîner une rotation de l'axe 13 et, par suite, une rotation des pales de l'hélice 6 vers leur position de drapeau.

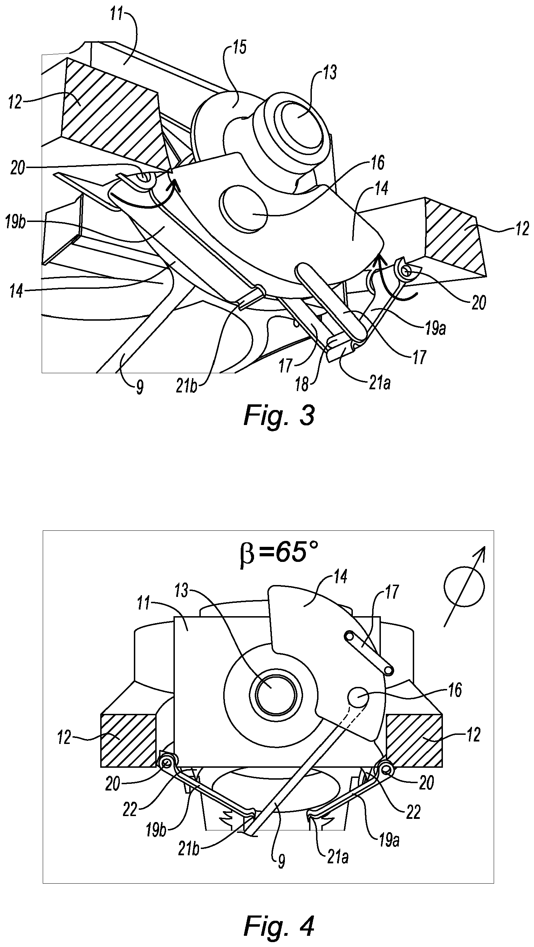

En se référant maintenant à la figure 3 on voit le dispositif de commande du calage des aubes 6. La tringle 9 est fixée, à son extrémité externe, sur les masselottes 14 par l'intermédiaire d'un tourillon 16 qui traverse les deux masselottes, s'étendant parallèlement à l'axe 13 et étant déporté latéralement par rapport à lui. La liaison entre l'extrémité externe de la tringle 9 et le tourillon 16 est une liaison libre en rotation autour du tourillon, de façon que la tringle 9 puisse faire tourner les masselottes 14 par son déplacement longitudinal, en agissant comme le ferait une bielle.

Chacune des masselottes 14 porte également un axe sur lequel est monté un maneton 17 ayant la forme d'une languette métallique apte à tourner dans un plan perpendiculaire à l'axe de commande 13. L'axe de rotation des manetons est positionné sur la bissectrice des secteurs angulaires constituant les masselottes 14, du côté extérieur des masselottes pour donner aux manetons 17 un bras de levier le plus grand possible. Les deux manetons 17 se déplacent autour de leur axe commun, en restant parallèles l'un à l'autre, leurs extrémités libres étant reliées par une tige de liaison 18 s'étendant selon la direction de l'axe de commande 13. Parallèlement l'anneau de retenue 12 porte, de chaque côté du pied de la pale de l'hélice 6, deux linguets 19, c'est à dire deux pièces en forme de languettes fixées à l'anneau 12 par une de leurs extrémités, au moyen d'un axe 20 autour duquel elles peuvent tourner. On distingue un premier linguet 19a qui agit lors du passage en réverse et un second linguet 19b qui agit, lui, lors du retour en fonctionnement normal. Des ressorts en torsion (non représentés), portés par ces axes de linguet 20, assurent un rappel des linguets en direction des masselottes 14 et du plan médian de l'anneau de retenue 12. Les axes de linguet 20 sont positionnés sur l'anneau de retenue 12, de part et d'autre du pied de la pale, en des points écartés latéralement par rapport à l'axe de commande 13, de façon que les linguets se fassent face et viennent, par leur extrémité libre, en butée contre les masselottes 14, quand il n'y a pas d'interférence entre eux et les manetons 17. Les linguets 19 ont, chacun, une forme plane en languette s'étendant dans un plan parallèle à l'axe de commande 13, depuis les axes 20 jusqu'à une extrémité libre 21 qui présente une forme en crochet. Celui-ci a pour fonction de à servir de butée à la tige de liaison 18 quand elle glisse sur ledit linguet. Le crochet a une forme de crochet double qui se redresse, dans un premier temps, en direction des masselottes 14 pour servir de butée comme indiqué précédemment puis qui, dans un deuxième temps, se replie dans la direction opposée pour servir de rampe d'entrée à la dite tige de liaison 18. Celle-ci peut, ainsi, revenir s'intégrer sur le linguet 19 après en être sortie, pour glisser sur lui dans la suite de son mouvement comme cela sera expliqué plus loin.

Alors que la tringle 9 sert d'actuateur pour la commande en rotation des masselottes 14, et, par suite des pignons portés par l'axe de commande 13, l'ensemble constitué par les linguets 19 et les manetons 17 sert d'actuateur complémentaire pour la rotation de ces masselottes en leur transmettant, dans certaines conditions de fonctionnement, le couple que fournissent les ressorts de rappel montés sur les axes de linguet 20.

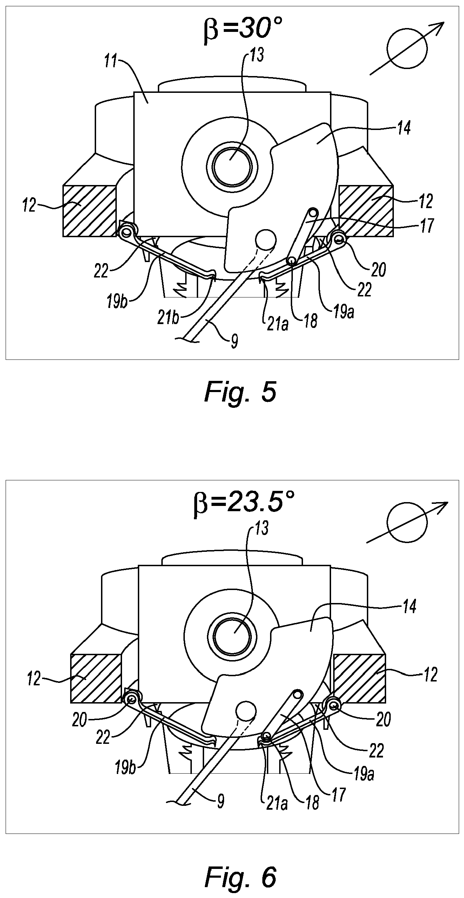

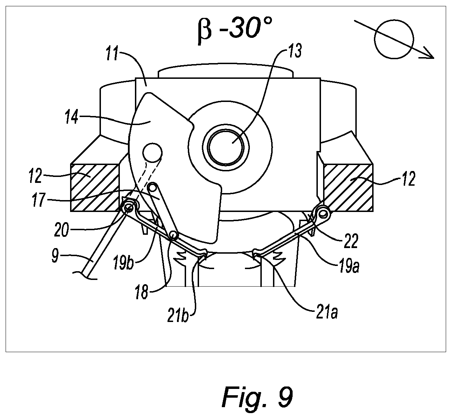

Alors que la figure 4 montre la position relative de tous les éléments participant à la commande du calage des hélices 6, en fonctionnement en croisière, les figures 5 à 9 détaillent l'évolution de ce positionnement lors d'un passage en réverse depuis le ralenti sol (figure 5) jusqu'à la position de réverse (figure 9). Sur ces figures apparaissent également, en haut à droite, l'orientation de l'hélice par rapport au calage nul et la valeur du calage β de celle-ci.

Sur la figure 4, illustrant un fonctionnement en croisière, les masselottes 14 sont en position mi-haute, dans une position d'équilibre imposée par la position de la tringle 9, un équilibre s'établissant entre la force centrifuge exercée par la rotation de l'anneau 12, qui tend à entraîner les masselottes vers le haut, et la traction imposée par la tringle 9 qui s'oppose à cette rotation. Cette position des masselottes correspond à une position angulaire de l'axe 13 donnant à l'hélice le calage β demandé par le système de régulation 10, qui est compris entre la position petit pas et la position grand pas. On remarque que dans cette position le maneton 17 n'est pas en contact avec le premier linguet 19a, sa tige de liaison 18 étant libre de se positionner contre les deux masselottes 14 et de suivre les éventuelles rotations demandées, par le système de régulation 10, à ces masselottes et à l'axe de commande 13. Les deux linguets 19 sont rappelés vers l'axe de commande 13 par leur ressort de rappel en torsion et viennent dans une position d'attente où ils sont, chacun, en butée contre un becquet 22 porté par l'anneau de retenue 12.

Sur la figure 5 l'hélice est dans une position correspondant à celle du ralenti au sol, lors de l'atterrissage, et qui correspond à celle du petit pas. Le calage β a diminué par rapport à sa valeur en croisière et les masselottes 14 se sont déplacées en direction du bas de la figure, c'est à dire en direction du calage nul. Dans cette position le maneton 17 s'est rapproché du linguet 19a et sa tige de liaison 18 est venue au contact de celui-ci. Aucun n'effort n'est pour l'instant exercé par le linguet sur la tige de liaison, celui-ci étant toujours en appui contre le becquet 22.

Sur la figure 6 l'hélice est dans une position intermédiaire dans la rotation pour passer en réverse, en réponse à une traction exercée par le système de régulation 10 sur la tringle 9. Les masselottes 14 ont dépassé la position du petit pas, le calage étant toujours positif. Par rapport à la figure 5 la tige de liaison 18 a glissé sur le linguet 19a, qui reste en appui sur le becquet 22, et elle est venue en contact contre le rebord formé par le crochet 21a de celui-ci.

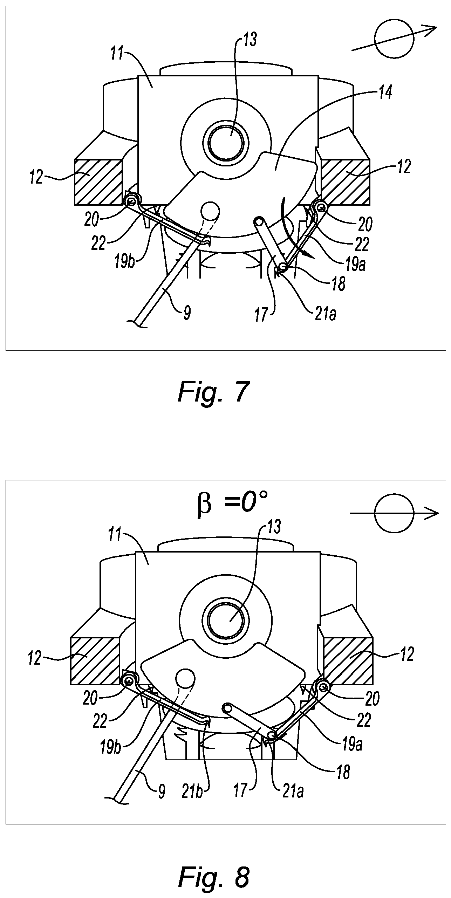

Sur la figure 7, l'hélice est dans une position encore plus avancée vers le calage nul, tout en restant encore avec un calage positif. Le maneton 17, dont l'extrémité libre est bloquée par le crochet 21a, a effectué une rotation qui l'amène maintenant à être orienté sensiblement perpendiculairement au premier linguet 19a. Cette rotation n'a pu avoir lieu que par une action de poussée du maneton sur le linguet 19a qui s'écarte du becquet 22. Le ressort de rappel en torsion situé sur l'axe du linguet est alors comprimé et sa force de rappel produit, en retour, une poussée du linguet sur le maneton 17 et, in fine sur les masselottes 14.

Sur la figure 8 l'hélice est dans la position de calage nul, la position des masselottes correspondant à leur position instable en rotation autour de l'axe de commande 13, sous l'action de la force centrifuge. L'extrémité libre du maneton 17 et la tige de liaison 18 sont toujours retenues par le crochet 21a. Dans cette situation la tringle 9 est tirée au maximum et son orientation est telle qu'elle pointe en direction de l'axe de commande 13 ; elle n'a alors plus d'action d'entraînement en rotation des masselottes 14 et ne permet pas de leur faire passer le point bas pour arriver vers les calages négatifs. En revanche, la configuration géométrique donnée à l'ensemble maneton-linguet est telle que la force exercée par le linguet ne passe pas par l'axe de commande 13 et pousse les masselottes au delà de leur position actuelle. Les masselottes 14 ne peuvent alors pas rester dans cette position instable, ce qui est le but recherché par l'invention.

Sur la figure 9 l'hélice est en position de réverse. Les dispositifs participant à la commande de son calage sont dans une position symétrique de celle qu'ils ont au ralenti au sol, en utilisation normale. Les masselottes 14 sont dans une position mi-haute, en équilibre entre une force centrifuge qui tend à les amener vers le drapeau par les calages négatifs, et une traction de la tringle 9 qui fixe leur position pour que le calage en réverse corresponde à celui qui donne au moteur la meilleure poussée vers l'arrière. Le maneton 17 a été entraîné par les masselottes 14 et a échappé au crochet 21a du premier linguet 19a ; il s'est glissé sous le second linguet 19b, associé aux calages négatifs, en utilisant la rampe du crochet 21b de celui-ci. Comme sur la figure 5, la tige de liaison 18 est repliée contre les masselottes 14 sous l'action du second linguet et de son ressort de rappel et le second linguet 19b est en appui contre le becquet 22 correspondant.

On va maintenant décrire le fonctionnement du dispositif de commande selon l'invention en détaillant le changement du calage des hélices d'un moteur à hélices rapides en passant de la position de croisière à celle de réverse, en fin d'atterrissage de l'aéronef.

En fonctionnement normal, en croisière en vol ou en approche avant l'atterrissage, le calage des hélices 6 se trouve compris entre la position du petit pas et celle du grand pas, dans une configuration décrite sur la figure 4. Les masselottes 14 sont retenues par la tringle 9 qui les empêche de venir dans la position du drapeau sous l'action de la force centrifuge qui s'exerce sur elles. Les manetons 17 sont libres de tourner autour du tourillon 16 des masselottes et la tige de liaison 18 n'interfère pas avec le premier linguet 19a. Le réglage du calage des hélices s'effectue normalement par une action de la tringle 9 sur les masselottes, sans que le dispositif d'aide au passage en réverse n'intervienne.

Après l'atterrissage de l'aéronef le pilote réduit les gaz et amène le moteur au régime de ralenti sol, ce qui se traduit par l'envoi du calage des hélices dans la position du petit pas illustré sur la figure 5. Le système de régulation 10 a, pour cela, tiré sur la tringle 9 et fait tourner les masselottes 14 vers une position correspondant à un calage d'environ 30°. Dans cette position, les manetons 17 sont venus en position basse, où la tige de liaison 18 entre, par construction, en contact avec le premier linguet 19a. Ce contact entre la tige de liaison 18 et le premier linguet s'établit sensiblement au milieu de celui-ci, sans qu'une pression ne s'établisse encore entre les deux pièces.

Le pilote enclenche alors le passage en réverse en demandant au système de régulation d'effectuer une traction sur la tringle 9 pour l'amener dans sa position la plus rentrée possible par rapport aux masselottes 14. Celles-ci tournent alors en direction de leur position correspondant au calage nul, entraînant dans leur sillage les manetons 17 et la tige de liaison 18. Celle-ci glisse, tout d'abord, le long du premier linguet 19a jusqu'à venir se coincer contre le crochet 21a (position illustrée sur la figure 6). Au delà de cette position, la rotation des masselottes 14 se poursuivant, elles entraînent les manetons 17 qui repoussent progressivement le linguet 19a en l'écartant des masselottes, et en comprimant le ressort de rappel en torsion situé sur son axe de rotation 20 (cf. figure 7).

Du fait de la poursuite de l'action de la tringle 9, les masselottes arrivent dans une position de symétrie par rapport au plan médian de l'anneau de retenue 12, ce qui correspond à leur position d'équilibre instable (cf. figure 8). Dans cette position, la tringle 9 est tirée au maximum par le système de régulation 10 et se trouve à pointer en direction de l'axe de commande 13 ; elle n'a donc plus d'effet sur la rotation des masselottes 14 et ne peut pas la prolonger par une traction supplémentaire. En revanche lorsque les masselottes sont dans cette position d'équilibre instable, les manetons 17 reçoivent une poussée de la part du premier linguet 19a, qui provient du couple de réaction de son ressort en torsion. Cette poussée n'est, quant à elle, pas orientée vers l'axe de commande 13 mais elle pointe du côté des calages négatifs. Les masselottes sont ainsi conduites à poursuivre leur rotation et à échapper à cette position d'équilibre instable, ce qui répond ainsi au problème technique que se propose de résoudre l'invention.

A partir de là, la force centrifuge qui s'exerce sur les masselottes 14 les entraîne naturellement dans une poursuite de la rotation qui fait augmenter le calage des hélices, dans le sens des calages négatifs. La tringle 9 est laissée libre de façon à laisser ce mouvement se produire jusqu'à une position angulaire préprogrammée. Cette rotation fait par ailleurs sortir la tige de liaison 18 du crochet 21a du premier linguet, et celle-ci vient rencontrer le crochet 21b du second linguet 19b. La forme de rampe donnée à l'extrémité du crochet permet à cette tige 18 de glisser sur lui et de venir s'intégrer entre le second linguet 19b et les masselottes 14, mettant ainsi en place les éléments pour assurer le passage des masselottes au travers de leur point d'équilibre instable lors du retour en régulation normale.

Le système s'immobilise dans une position où la tringle 9 bloque tout mouvement ultérieur et compense l'action de cette force centrifuge (cf. figure 9). La position retenue est choisie par le concepteur du dispositif pour donner au calage des hélices la valeur qui donne la meilleure traction vers l'arrière, compte tenu du régime donné au moteur dans la situation de réverse. Tel que représenté sur la figure 9, sans que cette valeur soit impérative, le calage de réverse correspond en négatif à celui du ralenti sol (-30°).

Le retour vers la position d'utilisation normale s'effectue de façon similaire, le passage au travers du point d'équilibre instable se faisant grâce à une poussée générée par le second linguet 19b, qui agit de la même façon que le fait le premier linguet 19a lors du passage en réverse, en prenant appui cette fois sur le crochet 21b du second linguet 19b.

## Revendications

1. Turbomachine comportant au moins une hélice (6) et un dispositif de commande du passage dans un mode réverse de la turbomachine, ladite hélice étant mobile entre une position de drapeau et une position de calage nul, ledit dispositif de commande comprenant :
- un axe de commande (13) destiné à agir sur le calage de l'hélice (6),
- au moins une masselotte (14) montée en porte-à-faux sur ledit axe de commande (13) et agencée de façon à entraîner l'hélice (6) vers sa position de drapeau sous l'action de la force centrifuge générée par la rotation de la turbomachine,
- un actuateur (9) apte à faire tourner ledit axe de commande (13) pour faire passer le calage de l'hélice (6) d'un mode traction au mode réverse, en traversant la position de calage nul,
**caractérisé en ce que** la masselotte (14) est dans une position d'équilibre instable vis-à-vis de l'action de la force centrifuge lorsque ledit axe de commande (13) fait passer le calage de l'hélice (6) par la position de calage nul et le dispositif de commande comporte un moyen d'actionnement (19) exerçant un couple sur l'axe de commande (13) lorsque ledit axe fait passer le calage de l'hélice (6) par la position de calage nul, de façon à empêcher la masselotte (14) de rester dans ladite position d'équilibre instable.

2. Turbomachine selon la revendication 1, dans laquelle ledit moyen d'actionnement (19) exerce un couple sur ledit axe de commande (13) tant lors du passage du mode traction vers le mode réverse que lors du retour du mode réverse vers le mode traction.

3. Turbomachine selon l'une des revendications 1 à 2, dans laquelle l'actuateur (9) n'exerce pas de couple sur ledit axe de commande (13) lorsque la masselotte est dans la position d'équilibre instable.

4. Turbomachine selon l'une des revendications 1 à 3, dans laquelle ledit moyen d'actionnement (19) exerce son couple sur ledit axe de commande (13) par l'intermédiaire d'un maneton (17) monté libre en rotation par une de ses extrémités sur ladite masselotte (14).

5. Turbomachine selon la revendication 4, dans laquelle ledit moyen d'actionnement (19) est maintenu à une de ses extrémités par un axe de rotation (20) déporté parallèlement à l'axe de commande (13) et est rappelé en rotation autour de cet axe (20), en direction du maneton (17), par un moyen formant couple de rappel.

6. Turbomachine selon la revendication 5, dans lequel le maneton (17) porte à son extrémité libre un moyen de transfert (18) apte à coopérer avec ledit moyen d'actionnement (19) de façon à transférer le couple fourni par ledit moyen d'actionnement (19) à l'axe de commande (13).

7. Turbomachine selon la revendication 6, dans laquelle ledit moyen d'actionnement est un linguet (19) et dans lequel le moyen de transfert est une tige (18) conformée pour glisser sur ledit linguet au cours du passage en réverse.

8. Turbomachine selon la revendication 7, dans laquelle ledit linguet comporte à son extrémité libre un moyen de retenue (21) apte à limiter le glissement de ladite tige (18) sur le linguet (19) au cours du passage en réverse, de façon à fournir une prise d'appui pour ledit maneton (17).

9. Turbomachine selon la revendication 8, dans laquelle ladite tige est en butée contre ledit moyen de retenue (21) avant l'atteinte de sa position d'équilibre instable par ladite masselotte (14).

10. Turbomachine selon la revendication 9, dans laquelle lors du passage de ladite masselotte dans sa position d'équilibre instable, la tige (18) est en butée contre ledit moyen de retenue (21) et le maneton (17) est orienté de façon à pousser la masselotte (14) au-delà de ladite position instable.

11. Turbomachine selon l'une des revendications 4 à 10, dans laquelle le moyen d'actionnement (19) comportent deux moyens d'actionnement (19), un premier moyen (19a) exerçant un couple sur le maneton (17) pour le passage de la position d'utilisation à la position de réverse et un second moyen (19b) exerçant un couple sur ledit maneton pour le retour à la position d'utilisation.

12. Turbomachine selon l'une des revendications 1 à 11, dans laquelle l'hélice comporte un pied de pale (8) sur lequel est monté le dispositif de commande du passage dans le mode réverse.

13. Turbomachine selon l'une des revendications 1 à 12, comportant deux hélices contrarotatives.

## Patentansprüche

1. Turbomaschine, die mindestens einen Propeller (6) und eine Vorrichtung zur Steuerung des Übergangs in den umgekehrten Modus der Turbomaschine aufweist, wobei der Propeller beweglich zwischen einer Segelposition und einer Position der Ausrichtung null ist, wobei die Vorrichtung zur Steuerung umfasst:
- eine Steuerwelle (13), die dazu bestimmt ist, auf die Ausrichtung des Propellers (6) einzuwirken,
- mindestens ein Ausgleichsgewicht (14), das an einer Auskragung auf der Steuerachse (13) angebracht ist und so angeordnet ist, um den Propeller (6) zu seiner Segelposition unter der Einwirkung der Zentrifugalkraft anzutreiben, die durch die Drehung der Turbomaschine erzeugt wird,
- einen Aktuator (9), der geeignet ist, die Steuerwelle (13) zu drehen, um die Ausrichtung des Propellers (6) von einem Zugmodus zu einem umgekehrten Modus gehen zu lassen, wobei er durch die Position der Ausrichtung null läuft,
**dadurch gekennzeichnet, dass** das Ausgleichsgewicht (14) in einer instabilen Gleichgewichtsposition gegenüber der Einwirkung der Zentrifugalkraft ist, während die Steuerachse (13) die Ausrichtung des Propellers (6) durch die Position der Ausrichtung null laufen lässt, und dass die Vorrichtung zur Steuerung ein Betätigungsmittel (19) umfasst, das ein Drehmoment auf die Steuerwelle (13) ausübt, wenn die Achse die Ausrichtung des Propellers (6) durch die Position der Ausrichtung null laufen lässt, um zu verhindern, dass das Ausgleichsgewicht (14) in der instabilen Gleichgewichtsposition bleibt.

2. Turbomaschine nach Anspruch 1, wobei das Betätigungsmittel (19) ein Drehmoment auf die Steuerwelle (13) sowohl während des Übergangs des Zugmodus zu dem umgekehrten Modus als auch während der Rückkehr des umgekehrten Modus zu dem Zugmodus ausübt.

3. Turbomaschine nach einem der Ansprüche 1 bis 2, wobei das Betätigungsmittel (9) kein Drehmoment auf die Steuerwelle (13) ausübt, wenn sich das Ausgleichsgewicht in der instabilen Gleichgewichtsposition befindet.

4. Turbomaschine nach einem der Ansprüche 1 bis 3, wobei das Betätigungsmittel (19) sein Drehmoment auf die Steuerwelle (13) mittels eines Zapfens (17) ausübt, der frei drehbar durch eines seiner Enden an dem Ausgleichsgewicht (14) angebracht ist.

5. Turbomaschine nach Anspruch 4, wobei das Betätigungsmittel (19) an einem seiner Enden durch eine Drehachse (20) gehalten wird, die zu der Steuerwelle (13) parallel versetzt ist und in Rotation um diese Achse (20) in Richtung des Zapfens (17) durch ein Mittel, das ein Rückstelldrehmoment bildet, zurückgestellt wird.

6. Turbomaschine nach Anspruch 5, wobei der Zapfen (17) an seinem freien Ende ein Übertragungsmittel (18) trägt, das geeignet ist, mit dem Betätigungsmittel (19) so zusammenzuwirken, um das Drehmoment, das von dem Betätigungsmittel (19) geliefert wird, zu der Steuerwelle (13) zu übertragen.

7. Turbomaschine nach Anspruch 6, wobei das Betätigungsmittel ein Sperrhebel (19) ist, und wobei das Übertragungsmittel eine Stange (18) ist, die geformt ist, um auf dem Sperrhebel während des Übergangs in umgekehrter Richtung zu gleiten.

8. Turbomaschine nach Anspruch 7, wobei der Sperrhebel an seinem freien Ende ein Rückhaltemittel (21) aufweist, das geeignet ist, das Gleiten der Stange (18) an dem Sperrhebel (19) während des Übergangs in umgekehrter Richtung zu begrenzen, um ein eine Lageraufnahme für den Zapfen (17) zu schaffen.

9. Turbomaschine nach Anspruch 8, wobei die Stange gegen das Haltemittel (21) vor dem Erreichen seiner instabilen Gleichgewichtsposition durch das Ausgleichsgewicht (14) anschlägt.

10. Turbomaschine nach Anspruch 9, wobei während des Übergangs des Ausgleichsgewichts in seine instabile Gleichgewichtsposition die Stange (18) gegen das Haltemittel (21) anschlägt und der Zapfen (17) so ausgerichtet ist, um das Ausgleichsgewicht (14) über die instabile Position zu drücken.

11. Turbomaschine nach einem der Ansprüche 4 bis 10, wobei das Betätigungsmittel (19) zwei Betätigungsmittel (19) aufweist, wobei ein erstes Mittel (19a) ein Drehmoment auf den Zapfen (17) für den Übergang von der Gebrauchsposition zu der umgekehrten Position ausübt, und wobei ein zweites Mittel (19b) ein Drehmoment auf den Zapfen für die Rückkehr zu der Gebrauchsposition ausübt.

12. Turbomaschine nach einem der Ansprüche 1 bis 11, wobei der Propeller einen Schaufelfuß (8) aufweist, auf dem die Vorrichtung zur Steuerung des Übergangs in den umgekehrten Modus angebracht ist.

13. Turbomaschine nach einem der Ansprüche 1 bis 12, die mindestens zwei in entgegengesetzter Richtung drehende Propeller aufweist.

## Claims

1. A turbine engine with at least one propeller (6) and a control device for switching the turbine engine into reverse mode, said propeller moving between a feathered position and a zero-pitch position, said control device comprising:
- a control spindle (13) intended to act on the calibration of the propeller (6),
- at least one bob weight (14) mounted in a cantilever position over said control spindle (13) and operated in such a way as to drive the propeller (6) towards its feathered position under action of the centrifugal force generated by rotation of the turbine engine,
- an actuator (9) capable of turning said control spindle (13) to switch the pitch of the propeller (6) from a traction mode to a reverse mode, passing via the zero-pitch position,
**characterised in that** the bob weight (14) is in an unstable position in relation to the centrifugal force when said control spindle (13) leads the pitch of the propeller (6) through the zero-pitch position, and the control device comprises an actuating means (19) applying a torque to the control spindle (13) when said spindle leads the pitch of the propeller (6) through the zero-pitch position, in such a way as to prevent the bob weight (14) from resting in said unstable position.

2. A turbine engine according to claim 1, in which said actuating means (19) applies torque force to said control spindle (13) as much during the switch from the traction mode to the reverse mode as during the return from the reverse mode to the traction mode.

3. A turbine engine according to one of claims 1 to 2, in which the actuator (9) does not apply torque force to said control spindle (13) when the bob weight is in the unstable position.

4. A turbine engine according to claims 1 to 3, in which said actuating means (19) applies its torque force to said control spindle (13) by means of a crank pin (17) mounted in such a way as to rotate freely by one of its ends on said bob weight (14).

5. A turbine engine according to claim 4, in which said actuating means (19) is held in place at one of its ends by a rotation axis (20) offset parallel to the control spindle (13) and is returned in rotation around this axis (20) in the direction of the crank pin (17), by a mean that create a return torque.

6. A turbine engine according to claim 5, in which the crank pin (17) carries at its free end a transfer means (18) capable of cooperating with said actuating means (19) in such a way as to transfer the torque applied by said actuating means (19) to the control spindle (13).

7. A turbine engine according to claim 6, in which said actuating means is a lever (19) and in which the transfer means is a rod (18) designed to slide over said lever during switching to the reverse mode.

8. A turbine engine according to claim 7, in which said lever comprises at its free end a retaining means (21) capable of limiting the sliding of said rod (18) over said lever (19) during the switching to the reverse mode, in such a way as to provide support for said crank pin (17).

9. A turbine engine according to claim 8, in which said rod is in abutment against said retaining means (21), before said bob weight (14) reaches its instable position.

10. A turbine engine according to claim 9, in which while said bob weight is moving into its unstable position, the rod (18) is in abutment against said retaining means (21) and the crank pin (17) is positioned in such a way as to push the bob weight (14) beyond said unstable position.

11. A turbine engine according to one of claims 4 to 10, in which said actuating means (19) comprises two actuating means (19), a first means (19a) applying a torque force to the crank pin (17) to move it from operating position to reverse position and a second means (19b) applying a torque to said crank pin for the return to the operating position.

12. A turbine engine according to one of claims 1 to 11, in which the propeller comprises a blade root (8) on which the control device for switching into the reverse mode is mounted.

13. A turbine engine according to one of claims 1 to 12, comprising two contra-rotating propellers.
